# EUROPEAN PATENT APPLICATION

(11) **EP 4 564 662 A1**
(43) Date of publication of application: **04.06.2025**
(21) Application number: 23925966.6
(22) Date of filing: 22.09.2023
(51) Int. Cl.: H02P 29/024, B60L 53/24, H02J 7/02

(54) **ELECTRIC MOTOR CONTROL SYSTEM, CONTROL METHOD FOR ELECTRIC MOTOR CONTROL SYSTEM, AND VEHICLE**

(30) Priority: 06.03.2023 CN 202310207607
(71) Applicant: Deepal Automobile Technology Co., Ltd., Chongqing 401133 (CN)
(72) Inventor: ZHANG, Songlin, Chongqing 401135 (CN); ZHOU, Hongbo, Chongqing 401135 (CN); CHEN, Jian, Chongqing 401135 (CN); TANG, Deqian, Chongqing 401135 (CN); PENG, Qianlei, Chongqing 401135 (CN)
(74) Representative: DREISS Patentanwälte PartG mbB
(86) International application number: PCT/CN2023/120817
(87) International publication number: WO 2024/183264

(57) **Abstract**

Disclosed are an electric motor control system, a control method, and a vehicle. The electric motor control system (10) comprises a rear-stage DC/DC converter (12) of an on-board charger (OBC), a front-stage PFC (14) of the OBC, a first direct-current capacitor (18), a second direct-current capacitor (13), an electric motor inverter (17) and an open-winding electric motor (16), wherein two ends of the first direct-current capacitor (18) are connected to a high-voltage battery (11) and the electric motor inverter (17), respectively, so as to form a first channel, a direct current of the high-voltage battery (11) is inverted into a first three-phase alternating current by means of the first channel, and the open-winding electric motor (16) is driven by means of the first three-phase alternating current; and the high-voltage battery (11), the rear-stage DC/DC converter (12) of the OBC, the second direct-current capacitor (13), and the front-stage PFC (14) of the OBC are connected in a preset sequence, so as to form a second channel, the direct current of the high-voltage battery (11) is inverted into a second three-phase alternating current by means of the second channel, the open-winding electric motor (16) is driven by means of the second three-phase alternating current. Therefore, the problems of the function reuse degrees of an electric motor inverter (17) and an OBC being low, the error-tolerance rate of electric motor control being low, etc., are solved.

## Description

### CROSS-REFERENCE TO RELATED APPLICATION

The present application is submitted based on and claims priority to Chinese Patent Application No. 202310207607.6, filed on March 6, 2023, the entire disclosure of which is incorporated herein by reference.

### TECHNICAL FIELD

The present disclosure relates to the field of electric vehicle electric motor control technology, and in particulay to an electric motor control system, a control method for an electric motor control system, and a vehicle.

### BACKGROUND

With the advent of the electric vehicle era, various manufacturers have launched all-in-one electric drive systems, which have gradually evolved from a three-in-one system with an electric motor, a reducer, and an electric controller to an all-in-one system with a charge and discharge function. The all-in-one technology has three important aspects as follows. Firstly, discrete devices are physically integrated into one, and a space within a vehicle is saved by sharing a housing and other methods to optimize a layout. Secondly, on the basis of the physical integration, a circuit topology, a drive board, and a control board are further reused for functional multiplexing as much as possible to achieve deep integration, which greatly reduces use of components and improves power density. Thirdly, on the basis of the deep integration, charge and discharge efficiency as well as drive efficiency are improved as much as possible through local modifications, for example, by improving a control strategy.

Currently, an electric motor controller system generally physically integrates an all-in-one power supply and an electric motor controller. The all-in-one power supply generally includes an On-Board Charger, OBC, an on-board Direct Current to Direct Current, DC/DC, and corresponding control and drive circuits. The electric motor controller is mainly composed of an electric motor inverter circuit and corresponding control and drive circuits. The OBC is a power electronic device that converts an alternating current outside the vehicle and a direct current of a high-voltage battery inside the vehicle. It is generally a two-stage structure consisting of a front-stage Power Factor Correction, PFC, and a rear-stage Logical Link Control, LLC, resonant converter. That is, the OBC has a terminal connected to an external charge and discharge device and another terminal connected to the high-voltage battery. The OBC is classified into a single-phase OBC and a three-phase OBC based on different charge and discharge powers, and a front-stage PFC structure of three-phase OBC can usually use a three-phase full-bridge converter circuit. The on-board DC/DC is a power electronic device that converts the alternating current outside the vehicle and the direct current of the high-voltage battery inside the vehicle into a low-voltage direct current to supply a low-voltage electrical equipment inside the vehicle. Currently, both the single-stage structure and the two-stage structure are used. The electric motor inverter circuit is a power electronic device that converts the direct current of the high-voltage battery inside the vehicle into an alternating current of a drive electric motor side and vice versa, which generally uses a single-stage structure, i.e., a large-capacity film capacitor and the three-phase full-bridge converter circuit, and which is configured to drive an electric motor and recover braking energy.

Currently, the OBC mainly has two sets of control circuits and drive circuits that correspond to the front-stage PFC structure and the rear-stage DC/DC structure, respectively; the on-board DC/DC has a set of control circuits and drive circuits, or the circuit function is multiplexed with the rear-stage DC/DC structure of the OBC, which can reduce use of some components; and the electric motor inverter circuit mainly has a set of control circuits and drive circuits. Under a driving condition or a charge and discharge condition of the vehicle, the OBC and the electric motor inverter with a same function (both of which can draw power from the high-voltage battery and be charged by the high-voltage battery) do not realize the functional multiplexing to reduce the use of the components.

An electric motor control circuit of an electric vehicle with a charge function is provided in the related art (Chinese Patent Application No. 201010178404.1). As shown in FIG. 1, the circuit topology and the control and drive circuits are deeply multiplexed by multiplexing the three-phase full-bridge converter circuit of the electric motor inverter. The charge and an inversion mode are realized by switching a first switch 1 and a second switch 2, and corresponding functions are controlled and switched.

However, this method has two problems as follows. (1) It is difficult to meet a wide range of voltage changes and current requirements of a battery by using only such a single-stage structure with the three-phase full-bridge converter circuit. (2) The charge and discharge as well as the electric motor drive multiplex the same topology, which has low fault tolerance and affects reliability of the charge and discharge as well as the drive.

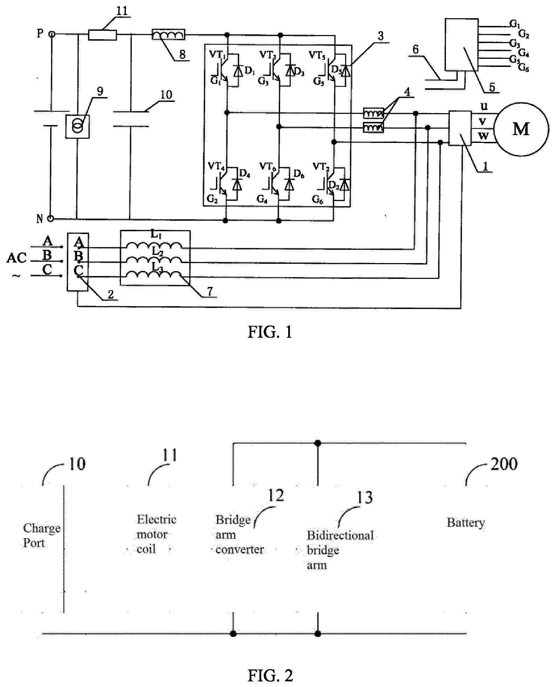

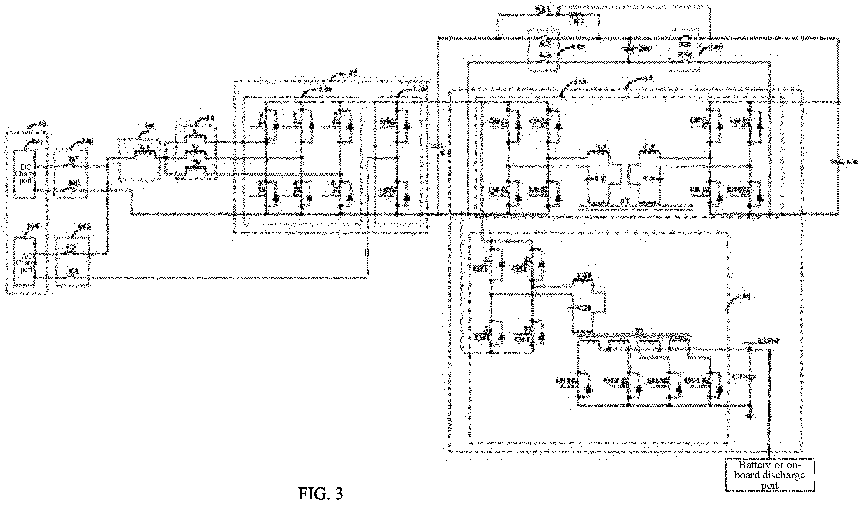

A vehicle and an energy conversion device and power system thereof are also provided in the related art (Chinese Patent Application No. 201910582154.9). As shown in FIG. 2, an energy conversion device with drive and charge functions including an electric motor coil, a bridge arm converter, and a bidirectional bridge arm is adopted to enable operation in a drive mode, an alternating-current charge mode, and a direct-current charge mode. Switching of alternating-current charge and discharge modes, direct-current charge and discharge modes, and an electric motor drive mode is realized by switching a first switch unit 141 and a second switch unit 142. As shown in FIG. 3, an electric motor coil 11 and a bridge arm converter 12 are configured for direct-current charge; the electric motor coil 11, the bridge arm converter 12, and a bidirectional bridge arm 13 are configured for alternating-current charge; the electric motor coil 11 and the bridge arm converter 12 are configured for electric motor drive; and a direct-current bus voltage of the bidirectional bridge arm 13 inputs electrical energy to a second DC/DC circuit 156 to supply a low-voltage device of a vehicle. The bridge arm converter 12 is deeply multiplexed for the alternating-current charge and discharge modes, the direct-current charge and discharge modes, and the electric motor drive mode.

However, this method has three problems as follows. (1) A set of bridge arms is added on the basis of the electric motor inverter bridge, which increases additional space and device cost. (2) There are many relays, which increases additional space and cost. (3) The charge and discharge as well as the electric motor drive multiplex the same topology, which has low fault tolerance and affects reliability of the charge and discharge as well as the drive.

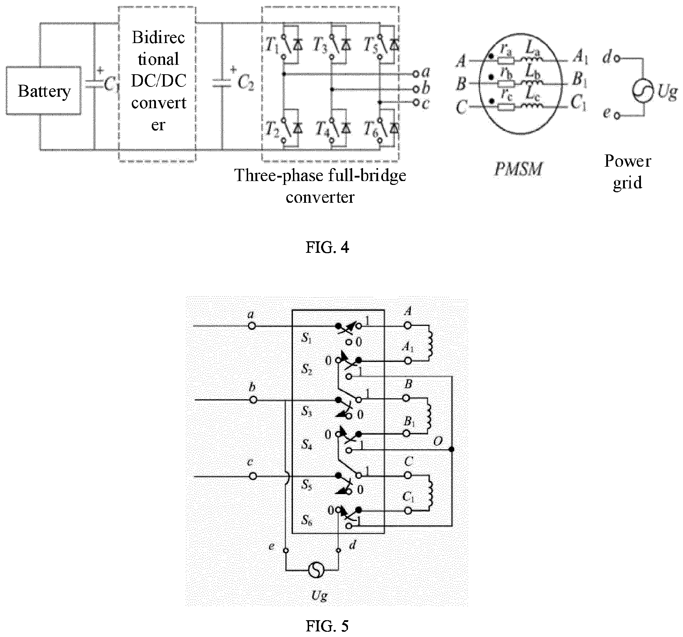

An open-circuited electric motor winding-based charge and discharge circuit topology (Chinese Patent Application No. 201811220817.4). As shown in FIG. 4, a stator winding of an electric motor is opened, and a charge and discharge function and a drive function of this topology are realized through switch combinations. As shown in FIG. 5, electric motor drive and the charge and discharge function of a system are realized by permutation and combination of switches S1 to S6.

However, this method has two problems as follows. (1) There are many relays, which increases additional space and device cost. (2) The charge and discharge as well as the electric motor drive multiplex the same topology, which has low fault tolerance and affects reliability of the charge and discharge as well as the drive.

A single-supply open-winding permanent magnet synchronous electric motor drive system for an electric vehicle is also provided in the related art (Chinese Patent Application No. 201210404534.1). As shown in FIG. 6, a dual-inverter open-winding electric motor drive topology supplied by a common direct-current bus is applied to high-power electric drive and improves reliability of the electric drive.

However, this method has two problems as follows. (1) The single-supply common direct-current bus structure cannot realize dual-isolation direct-current bus drive of a single power supply, application scope of which is small. (2) The electric motor drive alone requires a dual-inverter structure, and the functional multiplexing with the OBC is not considered, resulting in additional cost waste.

In summary, a method provided in the related art realizes integration of the charge and discharge as well as the electric motor drive by multiplexing the OBC and an electric motor inverter circuit topology, saving space in the vehicle and reducing the cost. However, there are still defects such as an inability to realize the single-supply dual-isolation direct-current bus drive, numerous relay units, and low fault tolerance in the electric motor drive as well as the charge and discharge, which need to be solved urgently.

### SUMMARY

The present disclosure provides an electric motor control system, a control method for an electric motor control system, and a vehicle, which solve problems of low functional multiplexing of an electric motor inverter and an on-board charger, low fault tolerance in an electric motor control, etc., improve drive efficiency and charge and discharge efficiency of an electric drive assembly or an electric control assembly, improve power density of the electric drive assembly or the electric control assembly, and improves fault operation capability of an electric motor.

A first aspect of the present disclosure provides an electric motor control system. The electric motor control system includes a rear-stage DC/DC converter of an OBC, a front-stage Power Factor Corrector, PFC, of the OBC, a first direct-current capacitor, a second direct-current capacitor, an electric motor inverter, and an open-winding electric motor. First to third alternating-current output terminals of the electric motor inverter are connected to first to third lead-out terminals of a stator winding of the open-winding electric motor, respectively. First to third alternating-current output terminals of the front-stage PFC of the OBC are connected to fourth to sixth lead-out terminals of the stator winding of the open-winding electric motor, respectively. A first channel is formed by connecting two terminals of the first direct-current capacitor to a high-voltage battery and the electric motor inverter, respectively, and after a direct current of the high-voltage battery is inverted into a first three-phase alternating current using the first channel, the open-winding electric motor is driven by the first three-phase alternating current; and/or a second channel is formed by connecting the high-voltage battery, the rear-stage DC/DC converter of the OBC, the second direct-current capacitor, and the front-stage PFC of the OBC in a predetermined order, and after the direct current of the high-voltage battery is inverted into a second three-phase alternating current using the second channel, the open-winding electric motor is driven by the second three-phase alternating current.

According to the above technical means, the problems of the low functional multiplexing of the electric motor inverter and the on-board charger, the low fault tolerance in the electric motor control, etc., are solved. The two channels can drive the electric motor independently, and three-level and four-level inverter outputs are realized based on a hardware foundation of a two-level voltage source inverter. A harmonic content of a stator winding current is lower and the drive efficiency is higher.

Further, the open-winding electric motor is further configured to reversely rectify regenerative braking energy to the high-voltage battery through the first channel and/or the second channel to charge the high-voltage battery.

According to the above technical means, the regenerative braking energy of the open-winding electric motor can be reversely rectified through the first channel and the second channel through to charge the high-voltage battery separately, and can be reversely rectified through the first channel and the second channel to charge the high-voltage battery simultaneously.

Further, the above electric motor control system further includes: a first on-board DC/DC. First and second direct-current output terminals of the first on-board DC/DC are connected to two terminals of a low-voltage battery, respectively, and third and fourth direct-current output terminals of the first on-board DC/DC are connected in parallel with the first direct-current capacitor and the high-voltage battery, respectively. The first on-board DC/DC is configured to supply electrical energy to the low-voltage battery or a low-voltage load using the direct current of the high-voltage battery or the regenerative braking energy of the open-winding electric motor.

According to the above technical means, by using the direct current of the high-voltage battery or the regenerative braking energy of the open-winding electric motor to supply the electrical energy to the low-voltage battery or the low-voltage load, the plurality of energy sources are supplied to the low-voltage battery or the load through the on-board DC/DC.

Further, the above electric motor control system further includes a second on-board DC/DC connected in parallel with the second direct-current capacitor. The second on-board DC/DC is configured to supply electrical energy to the low-voltage battery or the low-voltage load using electrical energy flowing through the second direct-current capacitor.

According to the above technical means, by using the electrical energy flowing through the second direct-current capacitor to supply the electrical energy to the low-voltage battery or the low-voltage load, the plurality of energy sources are supplied to the low-voltage battery or the load through the on-board DC/DC.

Further, the above electric motor control system further includes an energy boost assembly connected in parallel with each of the first direct-current capacitor and the high-voltage battery. The energy boost assembly is configured to supply electrical energy to the high-voltage battery, the low-voltage battery, and the open-winding electric motor.

According to the above technical means, the energy boost assembly, as another energy source, can supply the electrical energy to the high-voltage battery, the low-voltage battery, and the open-winding electric motor to achieve longer endurance.

Further, the above electric motor control system further includes a power generation assembly connected in parallel with each of the first direct-current capacitor and the high-voltage battery. The power generation assembly is configured to supply electrical energy to the high-voltage battery, the low-voltage battery, and the open-winding electric motor.

According to the above technical means, the power generation assembly, as another energy source, can supply the electrical energy to the high-voltage battery, the low-voltage battery, and the open-winding electric motor to achieve the longer endurance.

Further, a neutral point of the stator winding of the open-winding electric motor is in an open state.

According to the above technical means, a neutral point of a stator winding of a permanent magnet synchronous electric motor is opened, original first to third lead-out terminals ABC of the stator winding are retained as a first drive channel, and newly led fourth to sixth lead-out terminals XYZ serve as a second drive channel. Since only the neutral point of the stator winding is opened, modification and development cost of the electric motor is low.

Further, the open-winding electric motor is powered by a multi-converter.

According to the above technical means, the open-winding electric motor can be powered by the multi-converter, which can reduce a capacity of a single converter.

Further, the second direct-current capacitor is disposed between the rear-stage DC/DC converter of the OBC and the front-stage PFC of the OBC.

According to the above technical means, the second direct-current capacitor serves as an energy transfer station for the rear-stage DC/DC converter of the OBC and the front-stage PFC of the OBC.

Further, the second direct-current capacitor is obtained by connecting a plurality of capacitors in series, or by connecting the plurality of capacitors in parallel, or by connecting the plurality of capacitors in series and in parallel.

According to the above technical means, a series-parallel form is not limited. If the second direct-current capacitor is composed of two groups of capacitors connected in series, neutral line N of three-phase charge and discharge can be drawn from a midpoint of the two groups of capacitors.

Further, a circuit topology connection of the rear-stage DC/DC converter of the OBC, the second direct-current capacitor, and the high-voltage battery is in a form of an isolated topology or a non-isolated topology.

According to the above technical means, the rear-stage DC/DC of the OBC can flexibly select an isolated structure and a non-isolated structure, a dual inverter drive electric motor control strategy is determined by the rear-stage DC/DC structure of the OBC, and has strong expansibility.

Further, a circuit topology connection between the electric motor inverter and the first direct-current capacitor and a circuit topology connection between the electric motor inverter and the open-winding electric motor are each in a three-phase six-switch form.

According to the above technical means, selection of power devices for the three-phase six-switch converter is not limited, which can be Insulated Gate Bipolar Transistor, IGBT, devices or various Metal-Oxide-Semiconductor, MOS, tubes, including Silicon Carbide MOS, SiCMOS, Gallium Nitride MOS, GaNMOS, etc.

A second aspect of the present disclosure provides a control method for an electric motor control system. The method includes: forming a first channel by connecting two terminals of a first direct-current capacitor to a high-voltage battery and an electric motor inverter, respectively, and forming a second channel by connecting the high-voltage battery, a rear-stage DC/DC converter of an OBC, a second direct-current capacitor, and a front-stage PFC of the OBC in a predetermined order; inverting, using the first channel, a direct current of the high-voltage battery into a first three-phase alternating current, and inverting, using the second channel, the direct current of the high-voltage battery into a second three-phase alternating current; and driving, by the first three-phase alternating current and/or the second three-phase alternating current, an open-winding electric motor. First to third alternating-current output terminals of the electric motor inverter are connected to first to third lead-out terminals of a stator winding of the open-winding electric motor, respectively. First to third alternating-current output terminals of the front-stage PFC of the OBC are connected to fourth to sixth lead-out terminals of the stator winding of the open-winding electric motor, respectively.

Further, the control method for the electric motor control system mentioned above further includes: reversely rectifying, by the open-winding electric motor, regenerative braking energy to the high-voltage battery through the first channel and/or the second channel to charge the high-voltage battery.

Further, the control method for the electric motor control system mentioned above further includes: supplying, based on a first on-board DC/DC, electrical energy to a low-voltage battery or a low-voltage load using the direct current of the high-voltage battery or the regenerative braking energy of the open-winding electric motor. First and second direct-current output terminals of the first on-board DC/DC are connected to two terminals of the low-voltage battery, respectively; and third and fourth direct-current output terminals of the first on-board DC/DC are connected in parallel with the first direct-current capacitor and the high-voltage battery, respectively.

Further, the control method of the electric motor control system mentioned above further includes: supplying, based on a second on-board DC/DC, electrical energy to the low-voltage battery or the low-voltage load using electrical energy flowing through the second direct-current capacitor. The second on-board DC/DC is connected in parallel with the second direct-current capacitor.

Further, the control method for the electric motor control system mentioned above further includes: supplying, by an energy boost assembly, electrical energy to the high-voltage battery, the low-voltage battery, and the open-winding electric motor. The energy boost assembly is connected in parallel with each of the first direct-current capacitor and the high-voltage battery.

Further, the control method of the electric motor control system mentioned above also includes: providing, by a power generation assembly, electrical energy to the high-voltage battery, the low-voltage battery, and the open-winding electric motor. The power generation assembly is connected in parallel with each of the first direct-current capacitor and the high-voltage battery.

A third aspect of the present disclosure provides a vehicle. The vehicle includes the above-mentioned electric motor control system.

Therefore, in the present disclosure, the rear-stage DC/DC converter of the OBC, the front-stage PFC of the OBC, the first direct-current capacitor, the second direct-current capacitor, the electric motor inverter, and the open-winding electric motor are adopted; the first channel is formed by connecting the two terminals of the first direct-current capacitor to the high-voltage battery and the electric motor inverter, respectively; the second channel is formed by connecting the high-voltage battery, the rear-stage DC/DC converter of the OBC, the second direct-current capacitor, and the front-stage PFC of the OBC in the predetermined order; the direct current of the high-voltage battery is inverted into the first three-phase alternating current using the first channel; the direct current of the high-voltage battery is inverted into the second three-phase alternating current using the second channel; and the open-winding electric motor is driven by the first three-phase alternating current and/or the second three-phase alternating current. As a result, the problems of the low functional multiplexing of the electric motor inverter and the on-board charger, the low fault tolerance in the electric motor control, etc., are solved; the drive efficiency and the charge and discharge efficiency of the electric drive assembly or the electric control assembly are improved; the power density of the electric drive assembly or the electric control assembly are improved; and the fault operation capability of the electric motor is improved.

Additional aspects and advantages of the embodiments of present disclosure will be provided at least in part in the following description, or will become apparent in part from the following description, or can be learned from the practice of the embodiments of the present disclosure.

### BRIEF DESCRIPTION OF DRAWINGS

FIG. 1 is a schematic diagram of an electric motor control circuit of an electric vehicle in the related art.
FIG. 2 is a schematic diagram of a vehicle and an energy conversion device and power system thereof in the related art.
FIG. 3 is a schematic diagram of a circuit of a vehicle and an energy conversion device and power system thereof in the related art.
FIG. 4 is a schematic diagram of a charge and discharge circuit topology with an open-circuited electric motor winding in the related art.
FIG. 5 is a schematic diagram of a circuit of realization of a topology with charge and discharge and drive functions in the related art.
FIG. 6 is a schematic diagram of a single-supply open-winding permanent magnet synchronous electric motor drive system for an electric vehicle in the related art.
FIG. 7 is a block diagram of an electric motor control system according to an embodiment of the present disclosure.
FIG. 8 is a schematic diagram of a module structure of an electric motor control system according to an embodiment of the present disclosure.
FIG. 9 is a schematic diagram of a circuit structure of an electric motor control system according to an embodiment of the present disclosure.
FIG. 10 is a schematic diagram of a three-phase charge mode of an electric motor control system according to an embodiment of the present disclosure.
FIG. 11 is a schematic diagram of a single-phase charge mode of an electric motor control system according to an embodiment of the present disclosure.
FIG. 12 is a schematic diagram of first channel drive of an electric motor control system according to an embodiment of the present disclosure.
FIG. 13 is a schematic diagram of second channel drive of an electric motor control system according to an embodiment of the present disclosure.
FIG. 14 is a schematic diagram of a circuit structure of an electric motor control system according to an embodiment of the present disclosure.
FIG. 15 is a schematic diagram of a module structure of an electric motor control system according to an embodiment of the present disclosure.
FIG. 16 is a schematic diagram of a module structure of an electric motor control system according to an embodiment of the present disclosure.
FIG. 17 is a schematic diagram of a module structure of an electric motor control system with multipath high fault tolerance deep multiplexing applicable to an extended-range platform according to an embodiment of the present disclosure.
FIG. 18 is a schematic diagram of a module structure of an electric motor control system with multipath high fault tolerance deep multiplexing applicable to a fuel power generation platform according to an embodiment of the present disclosure.
FIG. 19 is a flowchart of a control method for an electric motor control system according to an embodiment of the present disclosure.

Description of reference numerals:10-electric motor control system, 12-rear-stage DC/DC converter of OBC, 14-front-stage PFC of OBC, 18-first direct-current capacitor, 13-second direct-current capacitor, 17-electric motor inverter, and 16-open-winding electric motor.

### DESCRIPTION OF THE EMBODIMENTS

Embodiments of the present disclosure are described in detail below, examples of which are illustrated in the accompanying drawings, wherein the same or similar reference numerals throughout represent the same or similar elements or elements with the same or similar functions. The embodiments described below with reference to the accompanying drawings are illustrative only, and are intended to explain rather than limit the present disclosure.

An electric motor control system, a control method for an electric motor control system, and a vehicle according to embodiments of the present disclosure will be described below with reference to the accompanying drawings. The present disclosure provides an electric motor control system. In the system, a rear-stage DC/DC converter of an OBC, a front-stage PFC of the OBC, a first direct-current capacitor, a second direct-current capacitor, an electric motor inverter, and an open-winding electric motor are adopted; a first channel is formed by connecting two terminals of the first direct-current capacitor to a high-voltage battery and the electric motor inverter, respectively; a second channel is formed by connecting the high-voltage battery, the rear-stage DC/DC converter of the OBC, the second direct-current capacitor, and the front-stage PFC of the OBC in the predetermined order; a direct current of the high-voltage battery is inverted into a first three-phase alternating current using the first channel; the direct current of the high-voltage battery is inverted into a second three-phase alternating current using the second channel; and the open-winding electric motor is driven by the first three-phase alternating current and/or the second three-phase alternating current. As a result, problems of low functional multiplexing of the electric motor inverter and the on-board charger, low fault tolerance in the electric motor control, etc., are solved; drive efficiency of the electric drive assembly or the electric control assembly are improved; power density of the electric drive assembly or the electric control assembly are improved; and fault operation capability of the electric motor is improved.

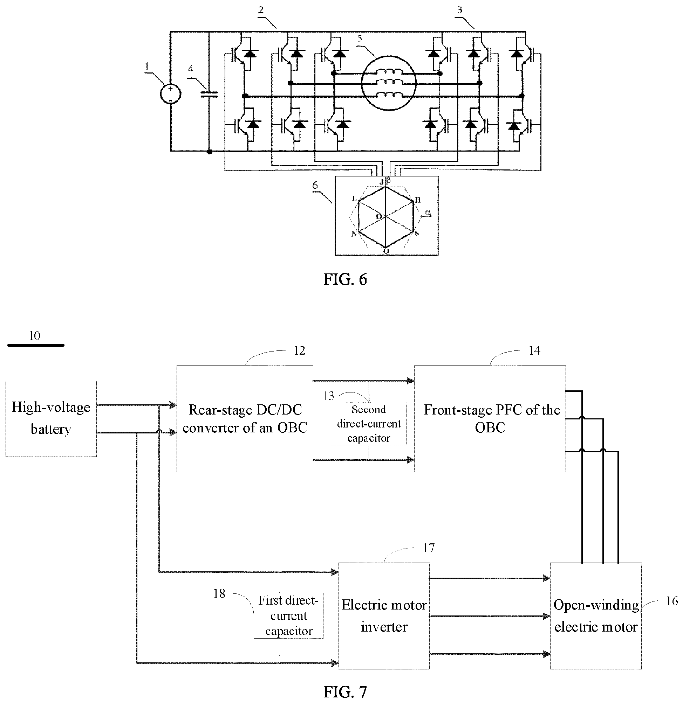

Specifically, FIG. 7 is a schematic diagram of an electric motor control system provided in an embodiment of the present disclosure.

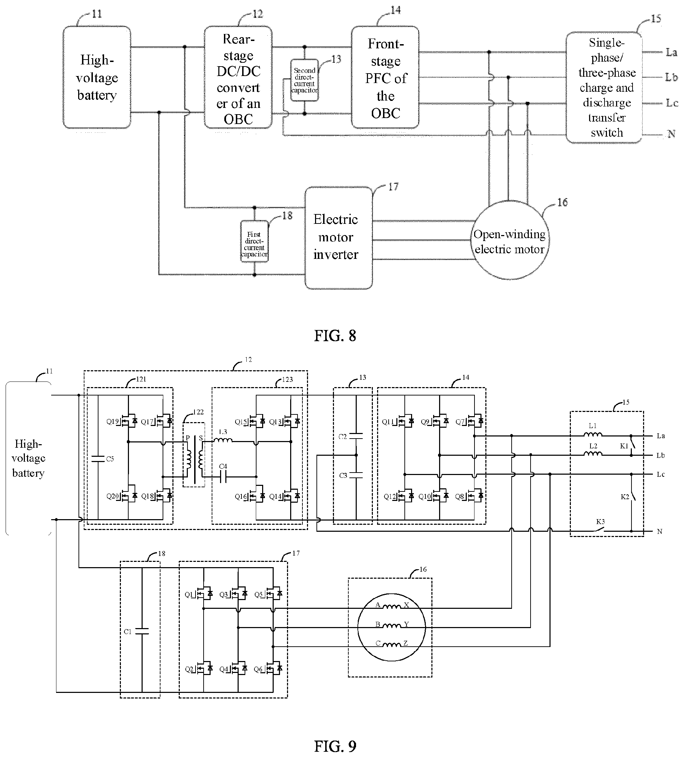

As shown in FIG. 7 and FIG. 8, an electric motor control system 10 includes a rear-stage DC/DC converter 12 of an OBC, a front-stage PFC 14 of the OBC, a first direct-current capacitor 18, a second direct-current capacitor 13, an electric motor inverter 17, and an open-winding electric motor 16. First to third alternating-current output terminals of the electric motor inverter 17 are connected to first to third lead-out terminals of the open-winding electric motor 16, respectively, and first to third alternating-current output terminals of the front-stage PFC 14 of the OBC are connected to fourth to sixth lead-out terminals of the stator winding of the open-winding electric motor, respectively. A first channel is formed by connecting two terminals of the first direct-current capacitor 18 to a high-voltage battery 11 and the electric motor inverter 17, respectively, and after a direct current of the high-voltage battery 11 is inverted into a first three-phase alternating current using the first channel, the open-winding electric motor 16 is driven by the first three-phase alternating current; and/or a second channel is formed by connecting the high-voltage battery 11, the rear-stage DC/DC converter 12 of the OBC, the second direct-current capacitor 13, and the front-stage PFC 14 of the OBC in a predetermined order, and after the direct current of the high-voltage battery 11 is inverted into a second three-phase alternating current using the second channel, the open-winding electric motor 16 is driven by the second three-phase alternating current.

Specifically, the first direct-current capacitor 18 serves as an energy transfer station for the electric motor inverter 17, the high-voltage battery 11, external direct-current energy, and the electric motor. Energy can source from the high-voltage battery 11 inside a vehicle, the external direct-current energy, and regenerative braking energy of the open-winding electric motor 16. The front-stage PFC 14 of the OBC and the electric motor inverter 17 can supply the electrical energy to the open-winding electric motor 16 by inverting the direct currents passing through from the second direct-current capacitor 13 and the first direct-current capacitor 18 into the three-phase alternating current, respectively, and drive wheels via a reducer and other devices. The front-stage PFC 14 of the OBC and the electric motor inverter 17 can drive the open-winding electric motor 16 separately or simultaneously.

Specifically, as shown in FIG. 8, each of the rear-stage DC/DC 12 of the OBC, the first direct-current capacitor 18, and the electric motor inverter 17 is connected to the high-voltage battery 11; each of the rear-stage DC/DC 12 of the OBC and the front-stage PFC 14 of the OBC is connected to the second direct-current capacitor 13; a single-phase/three-phase charge and discharge transfer switch 15 is connected to the front-stage PFC 14 of the OBC and the second direct-current capacitor 13; and the open-winding electric motor 16 is connected to the electric motor inverter 17 and the front-stage PFC 14 of the OBC.

In some embodiments, the open-winding electric motor 16 is further configured to reversely rectify regenerative braking energy to the high-voltage battery 11 through the first channel and/or the second channel to charge the high-voltage battery 11.

Specifically, the direct current of the high-voltage battery 11 can be inverted into the three-phase alternating current through the first channel formed by the first direct-current capacitor 18 and the electric motor inverter 17 to drive the open-winding electric motor 16; the direct current of the high-voltage battery 11 can be inverted into the three-phase alternating current through the second channel formed by the rear-stage DC/DC 12 of the OBC, the second direct-current capacitor 13, and the front-stage PFC 14 of the OBC to drive the open-winding electric motor 16; the direct current of the high-voltage battery 11 can be inverted into the three-phase alternating current through the first channel and the second channel to drive the open-winding electric motor 16 simultaneously; the regenerative braking energy of the open-winding electric motor 16 can be reversely rectified through the first channel to charge the high-voltage battery 11; the regenerative braking energy of the open-winding electric motor 16 can be reversely rectified through the second channel to charge the high-voltage battery 11; and the single-phase/three-phase charge and discharge transfer switch 15 can perform single-phase charge and discharge and three-phase charge and discharge of the high-voltage battery 11 through the second channel.

In this embodiment, by adopting the electric motor control system that integrates conventional electric motor drive as well as charge and discharge functions, including the open-winding electric motor 16, the electric motor inverter 17, the first direct-current capacitor 18, the front-stage PFC 14 of the OBC, the second direct-current capacitor 13, the rear-stage DC/DC 12 of the OBC, and the single-phase/three-phase charge and discharge transfer switch 15, the multipath drive, the regenerative braking energy recovery, and the charge and discharge channels are present in the electric motor controller system. That is, the first channel composed of the first direct-current capacitor 18 and the electric motor inverter 17 is used for the electric motor drive and the regenerative braking energy recovery, and the second channel composed of the rear-stage DC/DC 12 of the OBC, the second direct-current capacitor 13, and the front-stage PFC 14 of the OBC is used for the single-phase charge and discharge and the three-phase charge and discharge as well as the regenerative braking energy recovery. The first channel and the second channel are used for the electric motor drive simultaneously, and therefore the first channel composed of the OBC and the second channel composed of the electric motor inverter 17 are deeply multiplexed to form the drive system for the open-winding electric motor 16 with the single energy source and the dual direct-current buses, eliminating a need to add an additional three-phase converter and change the converter topology. In this way, a control effect of a three-level converter or even a four-level converter can be realized on the basis of the existing two-level converter hardware, the electric motor drive with high fault tolerance, high capacity, and high efficiency is realized, and higher power density is realized. As a result, problems of low integration and single functionality of the existing electric drive control and charge and discharge system are solved from the perspective of deep functional multiplexing, that is, the electric motor inverter circuit and the OBC charge and discharge circuit are deeply functionally multiplexed while imposing the fewest possible changes to the existing structure of the electric motor control system.

Further, in some embodiments, a circuit topology connection of the rear-stage DC/DC converter 12 of the OBC, the second direct-current capacitor 13, and the high-voltage battery 11 is in a form of an isolated topology or a non-isolated topology.

It can be understood that the rear-stage DC/DC 12 of the OBC is connected to each of the second direct-current capacitor 13 and the high-voltage battery 11, and a form of a circuit topology thereof is not limited, including various types of isolated and non-isolated topologies.

Further, the rear-stage DC/DC 12 of the OBC can be an isolated DC/DC or a non-isolated DC/DC. In a case where each of the front-stage PFC 14 of the OBC and the electric motor inverter 17 is a two-level converter, when the rear-stage DC/DC 12 of the OBC is an isolated DC/DC, two direct-current bus voltages of the second direct-current capacitor 13 and the first direct-current capacitor 18 are isolated from each other, and a voltage on the second direct-current capacitor 13 can be flexibly controlled. In this case, an output effect of four-level inverter electric motor drive can be realized, a harmonic content is reduced, and the drive efficiency is improved. When the rear-stage DC/DC 12 of the OBC is a non-isolated DC/DC, two direct-current bus voltages of the second direct-current capacitor 13 and the first direct-current capacitor 18 are equal. In this case, an output effect of three-level inverter electric motor drive is realized, the harmonic content is reduced, and the drive efficiency is improved.

Further, the second channel composed of the rear-stage DC/DC 12 of the OBC, the second direct-current capacitor 13 and the front-stage PFC 14 of the OBC can greatly improve the power density of the electric motor control system while multiplexing the charge and discharge and drive functions. With the liberalization of the power grid and the development of Vehicle to Grid, V2G, three-phase OBCs with a high power, such as 11 kW, 22 kW, 33 kW, etc., will gradually be integrated on automotive products. The three-phase OBC is multiplexed as the second channel and forms a dual inverter together with the first channel to drive the open-winding electric motor 16 simultaneously, which can achieve a significant increase in the power density of the electric control with relatively small changes.

Further, the dual inverter drive mode of the open-winding electric motor 16 can achieve high fault tolerance operation of a multi-phase electric motor. In a case where the rear-stage DC/DC 12 of the OBC is a non-isolated DC/DC, when a phase winding of an electric motor or an inverter fails, it is not necessary to reconstruct a switch topology. Only a faulty part needs to be isolated to achieve derating operation of the electric motor, ensuring reliability of the operation of the electric motor. Moreover, in a case where the rear-stage DC/DC 12 of the OBC is an isolated DC/DC topology, when a fault occurs inside any module of the electric motor inverter 17 or the front-stage PFC 14 of the OBC, the open-winding electric motor 16 can be driven separately to improve fault operation capability of the electric motor.

In some embodiments, a neutral point of the stator winding of the open-winding electric motor 16 is in an open state.

In some embodiments, a connection form of the stator winding is not limited, which can be in a shape of star, triangle, five-pointed star, pentagon, etc. In this case, the electric motor can be powered by a multi-converter, which can reduce the capacity of a single converter, and a current of a faulty phase does not affect operation of a normal phase in a star-shaped connection form.

In some embodiments, the open-winding electric motor 16 is powered by a multi-converter.

Further, in some embodiments, the second direct-current capacitor is obtained by connecting a plurality of capacitors in series, or by connecting the plurality of capacitors in parallel, or by connecting the plurality of capacitors in series and in parallel.

Specifically, the single-phase/three-phase charge and discharge transfer switch 15 is connected to the front-stage PFC 14 of the OBC and the second direct-current capacitor 13. When the single-phase/three-phase charge and discharge transfer switch 15 operates in a three-phase charge and discharge mode, the second direct-current capacitor 13 provides an equivalent neutral point. When the single-phase/three-phase charge and discharge transfer switch 15 operates in a single-phase charge and discharge mode, a midpoint of a third bridge arm of the front-stage PFC 14 of the OBC provides an equivalent neutral point.

Further, in some embodiments, the second direct-current capacitor 13 is obtained by connecting a plurality of capacitors in series, or by connecting the plurality of capacitors in parallel, or by connecting the plurality of capacitors in series and in parallel.

It can be understood that the second direct-current capacitor 13 is an energy transfer station for the front-stage PFC 14 of the OBC and the rear-stage DC/DC 12 of the OBC, and energy can source from the high-voltage battery 11 inside the vehicle, the electric motor, and an external charging pile. A series and parallel form of the second direct-current capacitor 13 is not limited, which can be formed by connecting a plurality of capacitors in series, by connecting the plurality of capacitors in parallel, or by connecting the plurality of capacitors in series and in parallel.

Specifically, the direct current of the high-voltage battery 11 is inverted into the three-phase alternating current through the first channel formed by the first direct-current capacitor 18 and the electric motor inverter 17 to drive the open-winding electric motor 16 separately, and the direct current of the high-voltage battery 11 is inverted into the three-phase alternating current through the second channel formed by the rear-stage DC/DC 12 of the OBC, the second direct-current capacitor 13, and the front-stage PFC 14 of the OBC to drive the open-winding electric motor 16 separately; the direct current of the high-voltage battery 11 is inverted into the three-phase alternating current through the first channel and the second channel to drive the open-winding electric motor 16 simultaneously; the regenerative braking energy of the open-winding electric motor 16 can be reversely rectified through the first channel and the second channel to charge the high-voltage battery 11 separately; and the single-phase/three-phase charge and discharge transfer switch 15 can perform single-phase charge and discharge and three-phase charge and discharge of the high-voltage battery 11 through the second channel separately.

Further, in some embodiments, a circuit topology connection between the electric motor inverter 17 and the first direct-current capacitor 18 and a circuit topology connection between the electric motor inverter 17 and the open-winding electric motor 16 are each in a three-phase six-switch form.

It can be understood that the electric motor inverter 17 is connected to each of the first direct-current capacitor 18 and the open-winding electric motor 16, and a circuit topology thereof is in a three-phase six-switch form, and switches thereof are various semiconductor switches. Selection of power devices for the three-phase six-switch converter is not limited, which can be IGBT devices or various MOS tubes, including SiCMOS, GaNMOS, etc.

The technical solution of the present disclosure will be described in detail below through a specific circuit schematic diagram.

Specifically, as shown in FIG. 9, FIG. 9 is an example circuit diagram of an electric motor control system of the present disclosure. In order to facilitate illustration of the electric motor control method, other electrical equipment, such as alternating-current Electromagnetic Interference, EMI, circuits and direct-current EMI circuits are ignored in the drawing, and only the high-voltage battery 11, the isolated rear-stage DC/DC 12 of the OBC, the second direct-current capacitor 13, the front-stage PFC 14 of the OBC, the single-phase/three-phase charge and discharge transfer switch 15, the open-winding electric motor 16, the electric motor inverter 17, and the first direct-current capacitor 18 are considered.

External input/output of the high-voltage battery 11 is composed of a direct-current positive electrode and a direct-current negative electrode, and an internal structure of the high-voltage battery 11 includes but is not limited to a high-voltage direct-current relay, a battery module, etc.

The isolated rear-stage DC/DC 12 of the OBC includes a first converter 121, an isolation transformer unit 122, and a second converter 123. The isolation transformer unit 122 includes a primary side P and a secondary side S. The first converter 121 includes a full-bridge rectifier circuit composed of bridge arm switch units Q19, Q20, Q17, and Q18 and a filter capacitor C5. Upper terminals of the bridge arm switch units Q19 and Q17 are connected together to form a first direct-current positive of the isolated rear-stage DC/DC 12 of the OBC. Lower terminals of the bridge arm switch units Q20 and Q18 are connected together to form a first direct-current negative of the isolated rear-stage DC/DC 12 of the OBC. The filter capacitor C5 is connected to the first direct-current positive and the first direct-current negative of the isolated rear-stage DC/DC 12 of the OBC. Midpoint of the bridge arm switch units Q19 and Q20 and midpoint of the bridge arm switch units Q17 and Q18 are each connected to the primary side P of the isolation transformer unit 122. The second converter 123 includes a full-bridge rectifier circuit composed of bridge arm switch units Q15, Q16, Q13, and Q14, a resonant inductor L3, and a resonant capacitor C4. Upper terminals of the bridge arm switch units Q15 and Q13 are connected together to form a second direct-current positive of the isolated rear-stage DC/DC 12 of the OBC, and lower terminals of the bridge arm switch units Q16 and Q14 are connected together to form a second direct-current negative of the isolated rear-stage DC/DC 12 of the OBC. A terminal of the resonant inductor L3 is connected to midpoint of the bridge arm switch units Q13 and Q14, and another terminal of the resonant inductor L3 is connected to the secondary side S of the isolation transformer unit 122. A terminal of the resonant capacitor C4 is connected to midpoint of the bridge arm switch units Q15 and Q16, and another terminal of the resonant capacitor C4 is connected to the secondary side S of the isolation transformer unit 122.

Further, the isolated rear-stage DC/DC 12 of the OBC includes but is not limited to various isolated DC/DC topologies, such as Series Resonant Converter, SRC, Logical Link Control, LLC, resonant converters, etc., and bridge arm switch units of the isolated rear-stage DC/DC 12 of the OBC include but are not limited to various fast and slow switches, such as Insulated Gate Bipolar Transistor, IGBT, Metal-Oxide-Semiconductor Field-Effect Transistor, MOSFET, Cool MOS, SiC MOS, etc.

The second direct-current capacitor 13 is composed of capacitors C2 and C3 connected in series. Midpoint lead-out wires of the capacitors C2 and C3 are connected to the single-phase/three-phase charge and discharge transfer switch 15.

The front-stage PFC 14 of the OBC is a three-phase full-bridge converter unit composed of bridge arm switch units Q7, Q8, Q9, Q10, Q11, and Q12. Upper terminals of the bridge arm switch units Q11, Q9, and Q7 are connected together to form a direct-current positive of the front-stage PFC 14 of the OBC, and lower terminals of the bridge arm switch units Q12, Q10, and Q8 are connected together to form a direct-current negative of the front-stage PFC 14 of the OBC.

The single-phase/three-phase charge and discharge transfer switch 15 includes a first switch K1, a second switch K2, a third switch K3, and energy storage inductors L1 and L2. Two terminals of the first switch K1 are connected between three-phase alternating-current lines La and Lb, two terminals of the second switch K2 are connected between three-phase alternating-current line Lc and a neutral line N, and two terminals of the third switch K3 are connected between the midpoint lead-out wire of the capacitor C2 and the neutral line N as well as the midpoint lead-out wire of the capacitor C3 and the neutral line N, respectively. The single-phase/three-phase charge and discharge transfer switch 15 is a single-phase/three-phase transfer control switch for charging and discharging of electric vehicles.

Stator three-phase windings AX, BY, and CZ of the open-winding electric motor 16 are all in an open state, without a neutral line lead-out, and the electric motor inverter 17 is a three-phase full-bridge converter unit composed of bridge arm switch units Q1, Q2, Q3, Q4, Q5, and Q6. Upper terminals of the bridge arm switch units Q1, Q3, and Q5 are connected together to form a direct-current positive of the electric motor inverter 17, and lower terminals of the bridge arm switch units Q2, Q4, and Q6 are connected together to form a direct-current negative of the electric motor inverter 17; and the first direct-current capacitor 18 is composed of a thin film capacitor C1.

A connection relationship according to the embodiments of the present disclosure is as follows: the first direct-current positive of the isolated rear-stage DC/DC 12 of the OBC is connected to a positive electrode of the high-voltage battery 11, and the first direct-current negative of the isolated rear-stage DC/DC 12 of the OBC is connected to a negative electrode of the high-voltage battery 11; the second direct-current positive of the isolated rear-stage DC/DC 12 of the OBC is connected to the direct-current positive of the front-stage PFC 14 of the OBC, and the first direct-current negative of the isolated rear-stage DC/DC 12 of the OBC is connected to the direct-current negative of the front-stage PFC 14 of the OBC; the midpoint lead-out wires of the bridge arm switch units Q7 and Q8 of the front-stage PFC 14 of the OBC are connected to a terminal of the inductor L1 of the single-phase/three-phase charge and discharge switch 15 and terminal X of the stator winding AX of the open-winding electric motor 16, respectively, the midpoint lead-out wires of the bridge arm switch units Q9 and Q10 of the front-stage PFC 14 of the OBC are connected to a terminal of the inductor L2 of the single-phase/three-phase charge and discharge switch 15 and terminal Y of the stator winding BY, respectively, and the midpoint lead-out wires of the bridge arm switch units Q11 and Q12 of the front-stage PFC 14 of the OBC are led out as the three-phase alternating-current line Lc, and connected to terminal Z of the stator winding CZ; the midpoint lead-out wires of the bridge arm switch units Q1 and Q2 of the electric motor inverter 17 are connected to terminal A of the stator winding AX of the open-winding electric motor 16, the midpoint lead-out wires of the bridge arm switch units Q3 and Q4 of the electric motor inverter 17 are connected to terminal B of the stator winding BY of the open-winding electric motor 16, and the midpoint lead-out wires of the bridge arm switch units Q5 and Q6 of the electric motor inverter 17 are connected to terminal C of the stator winding CZ of the open-winding electric motor 16; and the direct-current positive of the electric motor inverter 17 is connected to the positive electrode of the high-voltage battery 11, and the direct-current negative of the electric motor inverter 17 is connected to the negative electrode of the high-voltage battery 11.

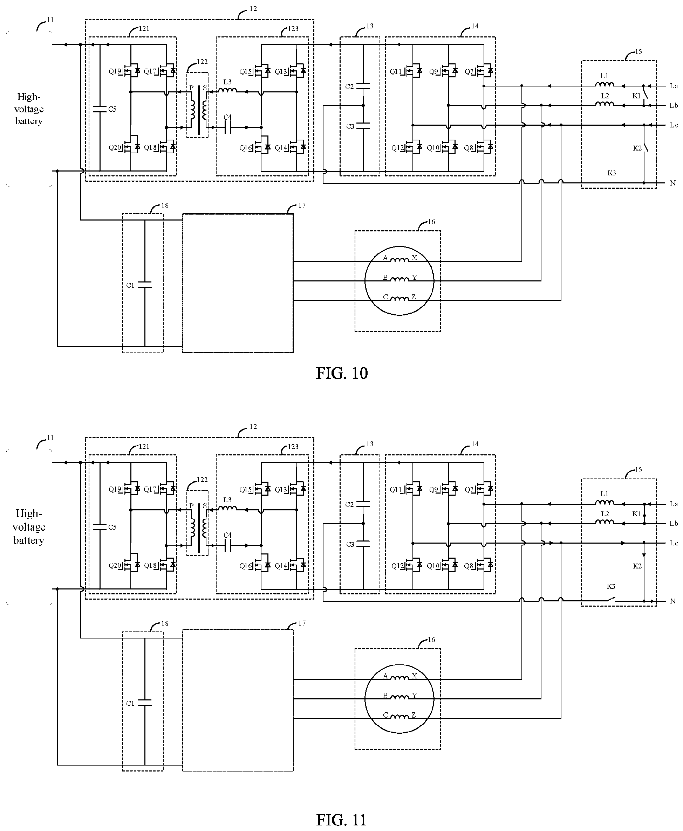

As shown in FIG. 10, the three-phase charge mode is implemented as follows: the first switch K1 and the second switch K2 of the single-phase/three-phase charge and discharge transfer switch 15 are both turned off, and the third switch K3 of the single-phase/three-phase charge and discharge transfer switch 15 is tuned on and connected to an external charging pile; the three-phase six switches Q1, Q1, Q2, Q3, Q4, Q5, and Q6 of the electric motor inverter 17 are all turned off to prevent the electric motor from starting during charge. In this case, an external three-phase alternating-current power supply is converted into a higher-voltage direct current through a capacitor midpoint two-level three-phase four-wire rectifier shown in the front-stage PFC 14 of the OBC, and then the higher-voltage direct current passes through an LLC circuit shown in the isolated rear-stage DC/DC 12 of the OBC to match a direct-current voltage of the battery for the charge.

First to third terminals of the single-phase/three-phase charge and discharge transfer switch 15 are connected to first to third alternating-current output terminals of the front-stage PFC 14 of the OBC, respectively, and a fourth terminal of the single-phase/three-phase charge and discharge transfer switch 15 is connected to a midpoint of the second direct-current capacitor 13. The single-phase/three-phase charge and discharge transfer switch 15 is configured to control first terminal La and second terminal Lb of the single-phase/three-phase charge and discharge transfer switch 15 to be equivalent to a single-phase live wire input terminal and control third terminal Lc and fourth terminal N of the single-phase/three-phase charge and discharge transfer switch 15 to be equivalent to a neutral line, when a single-phase charge and discharge instruction is received, to perform single-phase charge and discharge on the high-voltage battery 11 through the second channel; or, control the first to third terminals of the single-phase/three-phase charge and discharge transfer switch 15 to be in a three-phase independent phase line state when the three-phase charge and discharge instruction is received, the fourth terminal of the single-phase/three-phase charge and discharge transfer switch 15 being a neutral line in this case, to perform the three-phase charge and discharge on the high-voltage battery 11 through the second channel.

In addition, it should be noted that three-phase inductances are balanced during the charge and discharge. To facilitate illustration of the operating principle of the embodiments of the present disclosure, remaining inductors do not be labeled in circuits shown in FIG. 10. A topology of the front-stage PFC 14 of the OBC includes but is not limited to a capacitor midpoint two-level three-phase four-wire rectifier and a three-phase four-bridge arm rectifier.

Further, a three-phase discharge mode is similar to a three-phase charge mode, and details thereof will not be repeated herein. In a three-phase discharge mode, the OBC can also serve as a low-voltage Active Power Filter, APF, and be connected to a power grid to achieve harmonic control and improve quality of electrical energy of a low-voltage distribution network.

As shown in FIG. 11, the single-phase charge mode is implemented as follows: the first switch K1 and the second switch K2 of the single-phase/three-phase charge and discharge transfer switch 15 are turned on, the third switch K3 of the single-phase/three-phase charge and discharge transfer switch 15 is turned off and connected to an external charging pile; the three-phase six switches Q1, Q1, Q2, Q3, Q4, Q5, and Q6 of the electric motor inverter 17 are all turned off to prevent the electric motor from starting during charge. In this case, an external single-phase alternating-current power supply is converted into a higher-voltage direct current through two parallel interleaved PFCs shown in the front-stage PFC 14 of the OBC, and then the higher-voltage direct current passes through the LLC circuit shown in the isolated rear-stage DC/DC 12 of the OBC to match a direct-current voltage of the battery for the charge.

It should be noted that the single-phase discharge mode is similar to the single-phase charge mode, and details thereof will not be repeated herein.

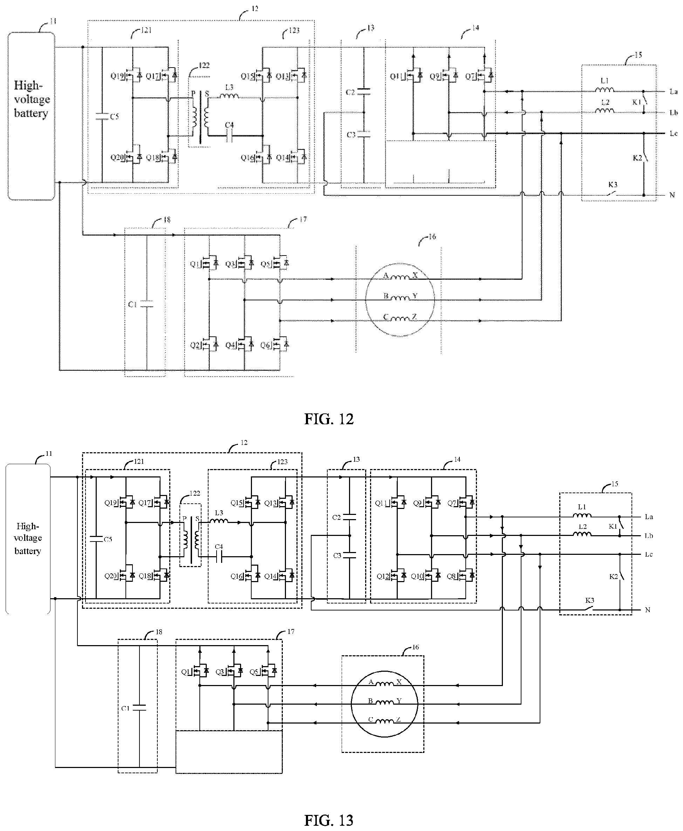

As shown in FIG. 12, the open-winding electric motor 16 driven through the first channel separately is implemented as follows: the first switch K1, the second switch K2, and the third switch K3 of the single-phase/three-phase charge and discharge transfer switch 15 are all turned off; the three-phase upper bridge arm switches Q11, Q9, and Q7 of the front-stage PFC 14 of the OBC are all conducted, and the lower bridge arm switches Q12, Q10, and Q8 are all turned off to close the neutral point of the three-phase stator winding of the electric motor. In this case, the direct current of the high-voltage battery 11 is inverted into a three-phase alternating current by the electric motor inverter 17 to drive the open-winding electric motor 16 separately.

In addition, when the open-winding electric motor 16 is driven through the first channel separately, the front-stage PFC 14 of the OBC can also allow the three lower bridge arm switches Q12, Q10, and Q8 thereof to be conducted simultaneously, which is not limited herein.

Further, the regenerative braking energy of the open-winding electric motor 16 is also recovered to the high-voltage battery 11 through the first channel.

As shown in FIG. 13, the open-winding electric motor 16 driven through the second channel alone is implemented as follows: the first switch K1, the second switch K2, and the third switch K3 of the single-phase/three-phase charge and discharge transfer switch 15 are all turned off; the three-phase upper bridge arm switches Q1, Q3, and Q5 of the electric motor inverter 17 are all conducted, and the lower bridge arm switches Q2, Q4, and Q6 of the electric motor inverter 17 are all turned off to close the neutral point of the three-phase stator winding of the electric motor. In this case, the direct current of the high-voltage battery 11 is inverted into the three-phase alternating current by the rear-stage DC/DC 12 of the OBC and the front-stage PFC 14 of the OBC to drive the open-winding electric motor 16 separately.

In addition, when the open-winding electric motor 16 is driven through the second channel alone, the electric motor inverter 17 can also allow the three lower bridge arm switches Q2, Q4, and Q6 thereof to be conducted simultaneously, which is not limited herein.

As shown in FIG. 10, the open-winding electric motor 16 driven through the first channel and the second channel simultaneously is implemented as follows: the first switch K1, the second switch K2, and the third switch K3 of the single-phase/three-phase charge and discharge transfer switch 15 are all turned off; the high-voltage battery 11 transmits an alternating current to the first channel and the second channel through the first direct-current capacitor 18 and the second direct-current capacitor 13 to supply the open-winding electric motor 16. When a voltage of the second direct-current capacitor 13 is controlled to be equal to a voltage of the first direct-current capacitor 18, the dual-inverter two-level open-winding electric motor 16 can be equivalent to be driven by a three-level inverter, and a number of different voltage vectors is 19. When the voltage of the second direct-current capacitor 13 is controlled to be equal to half of the voltage of the first direct-current capacitor 18, the dual-inverter two-level open-winding electric motor can be equivalent to be driven by a four-level inverter, and the number of different voltage vectors is 37. Since the dual inverters drives the open-winding electric motor 16, the stator phase windings are independent from each other, and there are many redundant voltage vectors. Even if there is a phase failure in the electric motor or a fault in the switch device, the derating operation can be achieved.

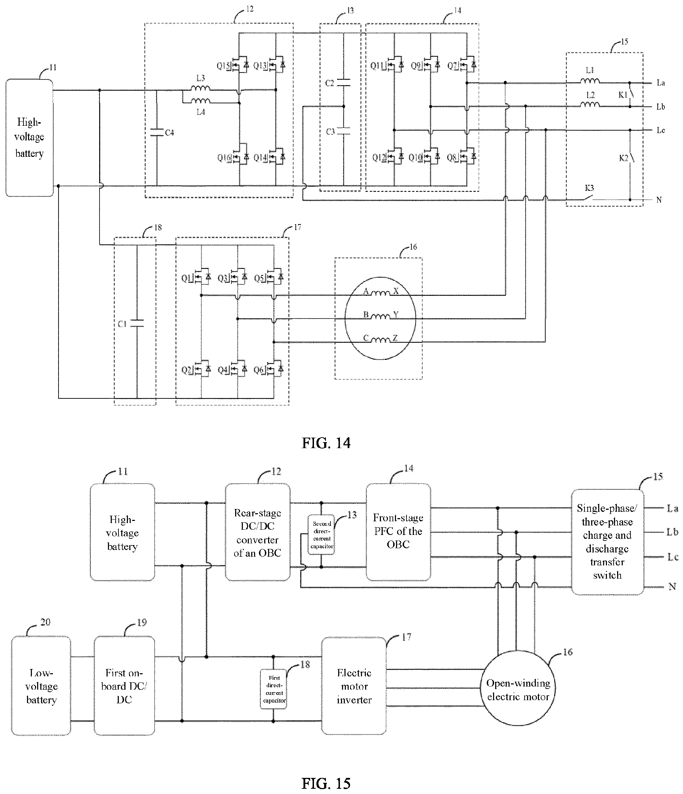

Further, as shown in FIG. 14, FIG. 14 is another example circuit diagram of an electric motor control system according to an embodiment of the present disclosure, which differs from FIG. 8 in that: the rear-stage DC/DC 12 of the OBC is converted from an isolated circuit topology to a non-isolated circuit topology, which directly determines a control mode of the dual-inverter driving the open-winding electric motor 16, and an isolated direct-current bus dual-inverter drive is converted to a common direct-current bus dual-inverter drive. In this case, a zero-sequence loop is formed, and an additional control strategy for suppressing a zero-sequence current is required.

Further, in some embodiments, the above-mentioned motor control system 10 also includes a first on-board DC/DC 19. First to second direct-current output terminals of the first on-board DC/DC 19 are connected to two terminals of a low-voltage battery 20, respectively, and third to fourth direct-current output terminals of the first on-board DC/DC 19 are connected in parallel with the first direct-current capacitor 18 and the high-voltage battery 11, respectively. The first on-board DC/DC is configured to supply electrical energy to the low-voltage battery 20 or a low-voltage load using the direct current of the high-voltage battery 11 or the regenerative braking energy of the open-winding electric motor 16.

Specifically, as shown in FIG. 15, a module structure of the electric motor control system according to the second embodiment of the present disclosure differs from that in the first embodiment in that: the first on-board DC/DC19 is connected in parallel with the first direct-current capacitor 18 and the high-voltage battery 11, and energy recovered from regenerative braking of the open-winding electric motor 16 can be directly supplied to the low-voltage battery 20 or the low-voltage load through the electric motor inverter 17 and the on-board DC/DC 19. The direct current of the high-voltage battery 11 can also be supplied to the low-voltage battery 20 or the low-voltage load through the on-board DC/DC 19. Similarly, a direct current output by the external alternating current through the OBC can also be supplied to the low-voltage battery 20 or the low-voltage load through the on-board DC/DC 19.

Further, in some embodiments, the electric motor control system 10 further includes a second on-board DC/DC 23 connected in parallel with the second direct-current capacitor 13. The second on-board DC/DC is configured to supply electrical energy to the low-voltage battery 20 or the low-voltage load using electrical energy flowing through the second direct-current capacitor 13.

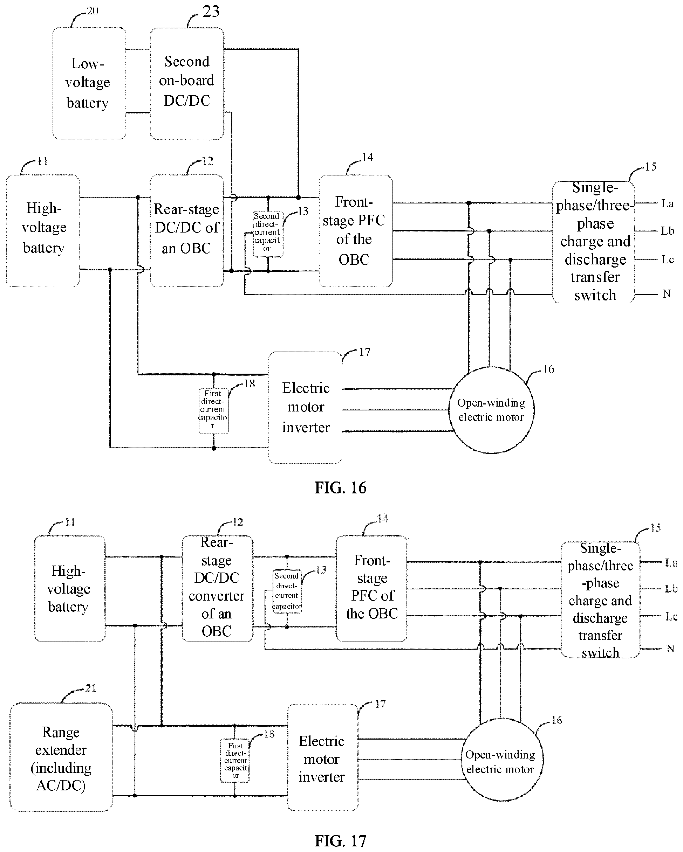

Specifically, as shown in FIG. 16, a module structure of an electric motor control system according to a third embodiment of the present disclosure differs from that in a second embodiment of the present disclosure in that the second on-board DC/DC 23 is connected in parallel with the second direct-current capacitor 13, and the second on-board DC/DC 23 can receive the electrical energy flowing through the second direct-current capacitor 13.

Further, in some embodiments, the electric motor control system 10 further includes an energy boost assembly 21 connected in parallel with each of the first direct-current capacitor 18 and the high-voltage battery 11. The energy boost assembly is configured to supply electrical energy to the high-voltage battery 11, the low-voltage battery 20, and the open-winding electric motor 16.

Specifically, as shown in FIG. 17, a fourth embodiment of the present disclosure provides a module structure of a multipath, highly faulty-tolerant, deeply multiplexed, extended-range electric motor control system, which differs from the first embodiment in that the energy boost assembly 21 (i.e., a range extender 21) can serve as another energy source to supply electrical energy to the high-voltage battery 11, the low-voltage battery 20, and the open-winding electric motor 16, specifically referring to FIG. 15 and FIG. 16.

Further, in some embodiments, the above-mentioned motor control system 10 further includes a power generation assembly 22 connected in parallel with each of the first direct-current capacitor 18 and the high-voltage battery 11. The power generation assembly is configured to supply electrical energy to the high-voltage battery 11, the low-voltage battery 20, and the open-winding electric motor 16.

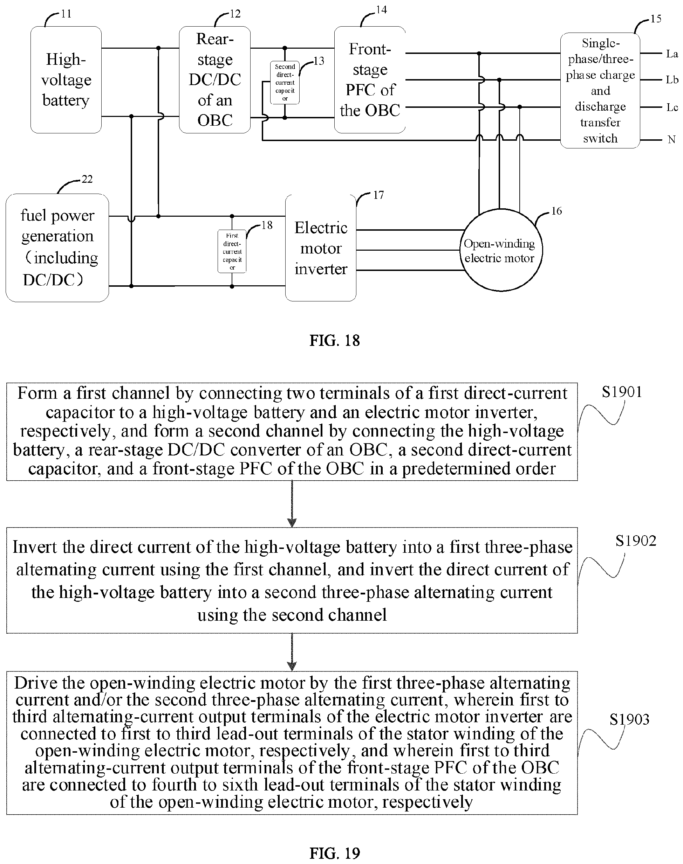

Specifically, as shown in FIG. 18, a fifth embodiment of the present disclosure provides a module structure of a multi-channel, highly faulty-tolerant, deeply multiplexed fuel power generation version electric motor control system, which differs from the first embodiment in that the power generation assembly 22 (i.e., a fuel power generator 22) can serve as another energy source to supply electrical energy to the high-voltage battery 11, the low-voltage battery 20, and the open-winding electric motor 16, specifically referring to FIG. 15 and FIG. 16.

On this basis, both extended-range power generation and fuel cell power generation can serve as extended energy sources for an electric motor control system and a control method thereof, and a vehicle.

Comparison between the embodiments of the present disclosure and the related art is as follows.
(1) Since the existing electric motor control system that integrates the multiplexed electric motor inverter and OBC requires additional switch devices to be added to an electric motor stator winding side to avoid the starting of the electric motor during the charge and discharge, resulting in a waste of space and cost. However, in the electric motor control system according to the embodiments of the present disclosure, by using the open-winding electric motor, when the OBC performs the charge and discharge operations, it is only necessary to control the switch devices of the electric motor inverter, avoiding the electric motor from starting incorrectly. No additional switches is needed to be added on the electric motor stator winding side, which reduces the cost and the space, and is more conducive to optimizing a layout structure of the electric motor control system to achieve higher power density.
(2) In the related art, if a multi-level control effect is required, a more complex multi-level converter topology is required to drive the electric motor, resulting in an increase in a number of electric motor inverter switch devices and other auxiliary devices, thereby increasing the cost of the electric motor control system as well as the space layout, which in turn reduces the power density. In the embodiments of the present disclosure, by multiplexing the OBC as the second channel to drive the electric motor together with the first channel of the electric motor inverter, while imposing the minor changes to the existing structure, an output effect of a three-level inverter or even a four-level inverter can be achieved on a hardware basis of a two-level inverter, i.e., high-efficiency drive.
(3) In the related art, if output power of the electric motor is increased, a switch device with higher power needs to be used, which is costly and has fewer options. However, in the embodiments of the present disclosure, by adopting the dual inverter drive mode composed of the multiplexed OBC and motor inverter, a higher power output of the electric motor can be achieved without changing the switch device.
(4) In the related art, multi-phase electric motors are often adopted to improve fault tolerance in electric motor operation, and stator and rotor windings of the electric motor need to be redesigned. However, in the embodiments of the present disclosure, the open-winding electric motor is adopted, and it is only necessary to open the neutral point of the stator winding, which results in low electric motor design difficulty and easier control of design cost. When the electric motor inverter fails completely, the second channel composed of the multiplexed OBC can still serve as an emergency channel to drive the electric motor to operate at a reduced rating.

In summary, in the embodiments of the present disclosure, by adopting the electric motor control system that integrates conventional electric motor drive as well as charge and discharge functions, including the open-winding electric motor, the electric motor inverter, the first direct-current capacitor, the front-stage PFC of the OBC, the second direct-current capacitor, the rear-stage DC/DC of the OBC, and the single-phase/three-phase charge and discharge transfer switch 15, the multipath drive, the regenerative braking energy recovery, and the charge and discharge channels are present in the electric motor control system, and the front-stage PFC of the OBC is deeply multiplexed with the electric motor inverter to form the open-winding electric motor drive system with the single energy source and the dual direct-current buses. It is not necessary to add an additional three-phase converter or change the converter topology. The control effect of the three-level converter or even the four-level converter is realized on the hardware basis of the two-level converter, the fault tolerance and capacity efficiency of the electric motor drive are improved, and the higher power density is realized. In this way, the problems of the low integration and the single functionality of the electric drive control and the charge and discharge system are solved from the perspective of deeply functional multiplexing in the related art.

In the electric motor control system according to the embodiments of the present disclosure, the rear-stage DC/DC converter of the OBC, the front-stage PFC of the OBC, the first direct-current capacitor, the second direct-current capacitor, the electric motor inverter, and the open-winding electric motor are adopted; the first channel is formed by connecting the two terminals of the first direct-current capacitor to the high-voltage battery and the electric motor inverter, respectively; the second channel is formed by connecting the high-voltage battery, the rear-stage DC/DC converter of the OBC, the second direct-current capacitor, and the front-stage PFC of the OBC in the predetermined order; the direct current of the high-voltage battery is inverted into the first three-phase alternating current using the first channel; the direct current of the high-voltage battery is inverted into the second three-phase alternating current using the second channel; and the open-winding electric motor is driven by the first three-phase alternating current and/or the second three-phase alternating current. As a result, problems of low functional multiplexing of the electric motor inverter and the on-board charger, low fault tolerance in the electric motor control, etc., are solved; efficiency of the electric drive assembly or the electric control assembly is improved; power density of the electric drive assembly or the electric control assembly are improved; and fault operation capability of the electric motor is improved.

Secondly, a control method for an electric motor control system according to an embodiment of the present disclosure will be described with reference to the accompanying drawings.

FIG. 19 is a schematic flowchart of a control method for an electric motor control system according to an embodiment of the present disclosure.

As shown in FIG. 19, the control method for the electric motor control system includes actions at steps S1901 to S1903.

In step S1901, form a first channel by connecting two terminals of a first direct-current capacitor to a high-voltage battery and an electric motor inverter, respectively, and form a second channel by connecting the high-voltage battery, a rear-stage DC/DC converter of an OBC, a second direct-current capacitor, and a front-stage PFC of the OBC in a predetermined order.

In step S1902, invert the direct current of the high-voltage battery into into a first three-phase alternating current using the first channel, and invert the direct current of the high-voltage battery into a second three-phase alternating current using the second channel.

In step S1903, drive the open-winding electric motor by the first three-phase alternating current and/or the second three-phase alternating current. First to third alternating-current output terminals of the electric motor inverter are connected to first to third lead-out terminals of the stator winding of the open-winding electric motor, respectively. First to third alternating-current output terminals of the front-stage PFC of the OBC are connected to fourth to sixth lead-out terminals of the stator winding of the open-winding electric motor, respectively.

Further, in some embodiments, the control method for the electric motor control system mentioned above further includes: reversely rectifying, by the open-winding electric motor, regenerative braking energy to the high-voltage battery through the first channel and/or the second channel to charge the high-voltage battery.

Further, in some embodiments, the control method of the electric motor control system further includes: when receiving a single-phase charge and discharge instruction, controlling the first terminal La and the second terminal Lb of the single-phase/three-phase charge and discharge switch 15 to be equivalent to a single-phase live wire input terminal, and controlling the third terminal Lc and the fourth terminal N of the single three-phase charge and discharge switch 15 to be equivalent to a neutral line, so as to perform single-phase charge and discharge of the high-voltage battery 11 through the second channel, or, when receiving a three-phase charge and discharge instruction, controlling the first to third terminals of the single-phase/three-phase charge and discharge switch 15 to be in a three-phase independent phase line state, and the fourth end is a neutral line at this time; wherein, the first to third terminals of the single-phase/three-phase charge and discharge switch are respectively connected to the first to third output terminals of the front-stage PFC of the OBC, and the fourth end of the single-phase/three-phase charge and discharge switch is connected to the second direct-current capacitor.

Further, in some embodiments, the control method for the electric motor control system mentioned above further includes: supplying, based on a first on-board DC/DC, power to a low-voltage battery or a low-voltage load using the direct current of the high-voltage battery or the regenerative braking energy of the open-winding electric motor. First and second direct-current output terminals of the first on-board DC/DC are connected to two terminals of the low-voltage battery, respectively; and third and fourth direct-current output terminals of the first on-board DC/DC are connected in parallel with the first direct-current capacitor and the high-voltage battery, respectively.

Further, in some embodiments, the control method of the electric motor control system mentioned above further includes: supplying, based on a second on-board DC/DC, power to the low-voltage battery or the low-voltage load using electrical energy flowing through the second direct-current capacitor. The second on-board DC/DC is connected in parallel with the second direct-current capacitor.

Further, in some embodiments, the control method for the electric motor control system mentioned above further includes: supplying, by an energy boost assembly, electrical energy to the high-voltage battery, the low-voltage battery, and the open-winding electric motor. The energy boost assembly is connected in parallel with each of the first direct-current capacitor and the high-voltage battery.

Further, in some embodiments, the control method of the electric motor control system mentioned above also includes: supplying, by a power generation assembly, electrical energy to the high-voltage battery, the low-voltage battery, and the open-winding electric motor. The power generation assembly is connected in parallel with each of the first direct-current capacitor and the high-voltage battery.

It should be noted that the above explanation of the electric motor control system embodiments is also applicable to the control method for the electric motor control system of this embodiment, and details thereof will not be repeated herein.

In the electric motor control system according to the embodiments of the present disclosure, the first channel is formed by connecting the two terminals of the first direct-current capacitor to the high-voltage battery and the electric motor inverter, respectively; the second channel is formed by connecting the high-voltage battery, the rear-stage DC/DC converter of the OBC, the second direct-current capacitor, and the front-stage PFC of the OBC in the predetermined order; the direct current of the high-voltage battery is inverted into the first three-phase alternating current using the first channel; the direct current of the high-voltage battery is inverted into the second three-phase alternating current using the second channel; and the open-winding electric motor is driven by the first three-phase alternating current and/or the second three-phase alternating current. As a result, problems of low functional multiplexing of the electric motor inverter and the on-board charger, low fault tolerance in the electric motor control, etc., are solved; efficiency of the electric drive assembly or the electric control assembly is improved; power density of the electric drive assembly or the electric control assembly are improved; and fault operation capability of the electric motor is improved.

Embodiments of the present disclosure also provide a vehicle. The vehicle includes the above-mentioned motor control system.

In the vehicle according to the embodiments of the present disclosure, by the above-mentioned motor control system, the problems of the low functional multiplexing of the electric motor inverter and the on-board charger, the low fault tolerance in the electric motor control, etc., are solved; the efficiency of the electric drive assembly or the electric control assembly is improved; the power density of the electric drive assembly or the electric control assembly is improved; and the fault operation capability of the electric motor is improved.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. The appearances of the above phrases in various places throughout this specification are not necessarily referring to the same embodiment or example of the present disclosure. Furthermore, the particular features, structures, materials, or characteristics may be combined in any suitable manner in one or N embodiments or examples. In addition, different embodiments or examples and features of different embodiments or examples described in the specification may be combined by those skilled in the art without mutual contradiction.

In addition, the terms such as "first" and "second" are used herein for purposes of description and are not intended to indicate or imply relative importance, or to implicitly show the number of technical features indicated. Thus, the feature defined with "first" and "second" may explicitly or implicitly comprise one or more this feature. In the description of the present disclosure, "N" means at least two, for example, two or three, unless specified otherwise.

Any process or method described in a flow chart or described herein in other ways may be understood to include one or N modules, segments or portions of codes of executable instructions for achieving specific logical functions or steps in the process, and the scope of a preferred embodiment of the present disclosure includes other implementations, which should be understood by those skilled in the art.

It should be understood that each part of the present disclosure may be realized by the hardware, software, firmware or their combination. In the above embodiments, N steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array, a field programmable gate array, etc.

It would be understood by those skilled in the art that all or a part of the steps carried by the method in the above-mentioned embodiments may be completed by relevant hardware instructed by a program. The program may be stored in a computer readable storage medium. When the program is executed, one or a combination of the steps of the method in the above-mentioned embodiments may be completed.

Although embodiments of present disclosure have been shown and described above, it should be understood that above embodiments are just explanatory, and cannot be construed to limit the present disclosure, for those skilled in the art, changes, alternatives, and modifications can be made to the embodiments without departing from spirit, principles and scope of the present disclosure.

## Claims

1. An electric motor control system, comprising:
a rear-stage DC/DC converter of an On-Board Charger, OBC;
a front-stage Power Factor Corrector, PFC, of the OBC;
a first direct-current capacitor;
a second direct-current capacitor;
an electric motor inverter; and
an open-winding electric motor, wherein first to third alternating-current output terminals of the electric motor inverter are connected to first to third lead-out terminals of a stator winding of the open-winding electric motor, respectively, and wherein first to third alternating-current output terminals of the front-stage PFC of the OBC are connected to fourth to sixth lead-out terminals of the stator winding of the open-winding electric motor, respectively, wherein:
a first channel is formed by connecting two terminals of the first direct-current capacitor to a high-voltage battery and the electric motor inverter, respectively, and after a direct current of the high-voltage battery is inverted into a first three-phase alternating current using the first channel, the open-winding electric motor is driven by the first three-phase alternating current; and/or
a second channel is formed by connecting the high-voltage battery, the rear-stage DC/DC converter of the OBC, the second direct-current capacitor, and the front-stage PFC of the OBC in a predetermined order, and after the direct current of the high-voltage battery is inverted into a second three-phase alternating current using the second channel, the open-winding electric motor is driven by the second three-phase alternating current.

2. The electric motor control system according to claim 1, wherein the open-winding electric motor is further configured to:
reversely rectify regenerative braking energy to the high-voltage battery through the first channel and/or the second channel to charge the high-voltage battery.

3. The electric motor control system according to claim 2, further comprising:
a first on-board DC/DC, first and second direct-current output terminals of the first on-board DC/DC being connected to two terminals of a low-voltage battery, respectively, and third and fourth direct-current output terminals of the first on-board DC/DC being connected in parallel with the first direct-current capacitor and the high-voltage battery, respectively, and the first on-board DC/DC being confiugred to supply electrical energy to the low-voltage battery or a low-voltage load using the direct current of the high-voltage battery or the regenerative braking energy of the open-winding electric motor.

4. The electric motor control system according to claim 3, further comprising:
a second on-board DC/DC connected in parallel with the second direct-current capacitor, and the second on-board DC/DC being configured to supply electrical energy to the low-voltage battery or the low-voltage load using electrical energy flowing through the second direct-current capacitor.

5. The electric motor control system according to claim 4, further comprising:
an energy boost assembly connected in parallel with each of the first direct-current capacitor and the high-voltage battery, the energy boost assembly being configured to supply electrical energy to the high-voltage battery, the low-voltage battery, and the open-winding electric motor.

6. The electric motor control system according to claim 5, further comprising:
a power generation assembly connected in parallel with each of the first direct-current capacitor and the high-voltage battery, the power generation assembly being configured to supply electrical energy to the high-voltage battery, the low-voltage battery, and the open-winding electric motor.

7. The electric motor control system according to claim 1, wherein a neutral point of the stator winding of the open-winding electric motor is in an open state.

8. The electric motor control system according to claim 6, wherein the open-winding electric motor is powered by a multi-converter.

9. The electric motor control system according to claim 1, wherein the second direct-current capacitor is disposed between the rear-stage DC/DC converter of the OBC and the front-stage PFC of the OBC.

10. The electric motor control system according to claim 7, wherein the second direct-current capacitor is obtained by connecting a plurality of capacitors in series, or by connecting the plurality of capacitors in parallel, or by connecting the plurality of capacitors in series and in parallel.

11. The electric motor control system according to claim 1, wherein a circuit topology connection of the rear-stage DC/DC converter of the OBC, the second direct-current capacitor, and the high-voltage battery is in a form of an isolated topology or a non-isolated topology.

12. The electric motor control system according to claim 1, wherein a circuit topology connection between the electric motor inverter and the first direct-current capacitor and a circuit topology connection between the electric motor inverter and the open-winding electric motor are each in a three-phase six-switch form.

13. A vehicle, comprising the electric motor control system according to any one of claims 1 to 12.

14. A control method for an electric motor control system, comprising:
forming a first channel by connecting two terminals of a first direct-current capacitor to a high-voltage battery and an electric motor inverter, respectively, and forming a second channel by connecting the high-voltage battery, a rear-stage DC/DC converter of an OBC, a second direct-current capacitor, and a front-stage PFC of the OBC in a predetermined order;
Inverting, using the first channel, a direct current of the high-voltage battery into a first three-phase alternating current, and inverting, using the second channel, the direct current of the high-voltage battery into a second three-phase alternating current; and
driving, by the first three-phase alternating current and/or the second three-phase alternating current, an open-winding electric motor, wherein first to third alternating-current output terminals of the electric motor inverter are connected to first to third lead-out terminals of a stator winding of the open-winding electric motor, respectively, and wherein first to third alternating-current output terminals of the front-stage PFC of the OBC are connected to fourth to sixth lead-out terminals of the stator winding of the open-winding electric motor, respectively.

15. The method according to claim 14, further comprising:
reversely rectifying, by the open-winding electric motor, regenerative braking energy to the high-voltage battery through the first channel and/or the second channel to charge the high-voltage battery.

16. The method according to claim 15, further comprising:
supplying, based on a first on-board DC/DC, electrical energy to a low-voltage battery or a low-voltage load using the direct current of the high-voltage battery or the regenerative braking energy of the open-winding electric motor, wherein:
first and second direct-current output terminals of the first on-board DC/DC are connected to two terminals of the low-voltage battery, respectively; and
third and fourth direct-current output terminals of the first on-board DC/DC are connected in parallel with the first direct-current capacitor and the high-voltage battery, respectively.

17. The method according to claim 16, further comprising:
supplying, based on a second on-board DC/DC, electrical energy to the low-voltage battery or the low-voltage load using electrical energy flowing through the second direct-current capacitor, wherein the second on-board DC/DC is connected in parallel with the second direct-current capacitor.

18. The method according to claim 17, further comprising:
supplying, by an energy boost assembly, electrical energy to the high-voltage battery, the low-voltage battery, and the open-winding electric motor, wherein the energy boost assembly is connected in parallel with each of the first direct-current capacitor and the high-voltage battery.

19. The method according to claim 18, further comprising:
supplying, by a power generation assembly, electrical energy to the high-voltage battery, the low-voltage battery, and the open-winding electric motor, wherein the power generation assembly is connected in parallel with each of the first direct-current capacitor and the high-voltage battery.
